# EUROPEAN PATENT APPLICATION

(11) **EP 4 300 223 A1**
(43) Date of publication of application: **03.01.2024**
(21) Application number: 22182249.7
(22) Date of filing: 30.06.2022
(51) Int. Cl.: G05B 19/401, G01B 21/04

(54) **METHOD AND SYSTEM FOR DETERMINING A POSITION OF A POINT ON A SURFACE**

(71) Applicant: AB Sandvik Coromant, 811 81 Sandviken (SE)
(72) Inventor: ÖSTLING, Dan, 811 81 Sandviken (SE)
(74) Representative: Sandvik

(57) **Abstract**

The present invention relates to a machining system (100) and a method for determining a position of a point on a machined surface of a workpiece (130), wherein the machining system comprises a machine tool (102), a cutting tool (104) comprising a tool body (105) that is arranged at the machine tool and includes at least one sensor (115), and a control system (150) adapted for controlling and monitoring the position of the tool body. The method comprises the steps of:
- machining (206) the workpiece using the cutting tool (104); and
- measuring the workpiece using a measurement tool (104, 600) comprising the tool body (105) and a first tip, wherein measuring the workpiece comprises:
- moving (208) the measurement tool towards the workpiece while measuring a parameter using the sensor (115), and
- determining, based on a position of the tool body as monitored by the control system and on values of the parameter as measured by the sensor, a first position of the first tip in which the tip touches the point on the machined surface, thereby indicating the position of the point on the machined surface.

## Description

### Technical field

The present disclosure relates generally to methods and systems for determining a position of a point on a surface, particularly for determining a point on a surface of a workpiece in a machining system.

### Background

In manufacturing, workpieces are machined in machining systems in order to create finished articles. The finished article needs to not deviate too much from its intended measurements, in order to fulfil its function. Depending on the type of article being manufactured, how much the article is allowed to deviate from its intended measurements, also called tolerances, may vary.

An article is machined in a machining system comprising various tools. After the article has been machined, a measurement system is used in order to determine if it fulfills the requirements with respect to tolerances. Typically, either the tools need to be replaced, and/or the article needs to be moved to another place, in order to perform the measurements. This is both time and resource consuming, especially in case the article is determined to deviate too much from the required tolerances, and needs to be machined further in order to be completed.

It would be beneficial to improve the current systems in order to decrease the time needed for inspecting the articles machined in a machining system, and for performing further operations after measurement, if needed.

Consequently, there exists a need for improvement when it comes to machining systems, particularly for measuring and evaluating an article.

### Summary

It is an object of the invention to address at least some of the problems and issues outlined above. An object of embodiments of the invention is to decrease the time needed for inspecting a machined workpiece. Another object of embodiments of the invention is to improve the accuracy of such inspection.

According to one aspect, the invention relates to a method for determining a position of a point on a machined surface of a workpiece in a machining system. The machining system comprises:
- a machine tool;
- a cutting tool comprising a tool body that is arranged at the machine tool and comprises at least one sensor; and
- a control system adapted for controlling and monitoring a position of the tool body.

The method comprises the steps of:
- machining the workpiece with the cutting tool; and then
- measuring the workpiece using a measurement tool comprising the tool body and a first tip, wherein measuring the workpiece comprises:
   - moving (208) the measurement tool towards the workpiece while measuring a parameter using the sensor, and
   - determining, based on a position of the tool body as monitored by the control system and on values of the parameter as measured by the sensor, a first position of the first tip in which the first tip touches the point on the machined surface, thereby indicating the position of the point on the machined surface.

By employing the same sensor-equipped tool body that is used for machining also when measuring the workpiece after machining, an efficient and accurate method for determining the position of a point on the machined surface is obtained. Preferably, the sensor used for measuring the workpiece after machining may be utilized also for measurements during the machining process. Hence, according to the present disclosure, a sensor that is embedded in a tool body may be used not only for monitoring a cutting process related parameter, such as deflection, during machining, but also for measuring the workpiece after machining.

By using the method according to the present invention, the workpiece can be measured without requiring the use of a separate dedicated measurement probe, or requiring that the workpiece is moved to a separate machine, such as a Coordinate Measuring Machine, for inspection. Since the measurement is made using the same tool body as also used when machining the surface, the accuracy is increased.

Machining of the workpiece refers to a cutting process in which the cutting tool and the workpiece are engaged during relative rotational movement therebetween, such that a cutting edge of the cutting tool cuts away material from a surface of the workpiece.

As already mentioned, the sensor may be used also for measurements during machining. However, the step of measuring the workpiece, as defined in the present disclosure, is performed after machining, i.e. when there is no relative rotational movement between the measurement tool and the workpiece.

The body of a cutting tool, when compared to a conventional measurement probe, is rigid and thus insensitive to vibrations and other disturbances. Therefore, if for example measuring the internal surface deep inside a machined hole, a conventional measuring probe may not have a sufficient stiffness, whereas the cutting tool itself, since able to machine the hole, has the required stiffness to provide reliable measurements.

Initiating and stopping movement of the tool body, i.e. movement of the cutting tool and the measurement tool, is effectuated via the control system.

The machine tool may be a computer- or computerized numerical control (CNC) machine tool, and in particular a machine tool useable for turning operations, such as a CNC-lathe, a multi task machine, a turn-mill machine, or a sliding head machine. The machining may be an internal turning process, wherein material from an internal surface of a workpiece, e.g. within a hole of a rotating workpiece, is removed. Internal turning is sometimes also referred to as boring. It is also envisaged that the method may be used in connection with other machining operations, such as milling.

As used herein, when referring to a "tip", this refers to a point of a part of the measurement tool that is meant to engage the workpiece, namely the most distal point thereof in the direction of movement of the measurement tool when moved towards the point on the surface for measuring the workpiece. In other words, the tip is the point of the measurement tool that first comes into contact with the point on the surface when the measurement tool is moved towards the surface for measuring the workpiece.

The tip may be located at a head arranged at an end of the tool body.

A machine interface may be arranged at an end of the tool body opposite the end at which the head is arranged, facilitating arranging the tool body at a machine tool.

Preferably, the parameter is measured continuously or intermittently during measuring the workpiece.

According to some embodiments, determining the first position of the first tip of the measurement tool comprises:
- detecting, based on the measured values of the parameter, the first tip coming into contact with the point on the machined surface of the workpiece;
- stopping the movement of the measurement tool;
- obtaining a position of the first tip based on the position of the tool body as monitored by the control system;
- determining, based on the measured values of the parameter, a deflection of the measurement tool; and
- determining the first position of the tip based on the determined deflection and the obtained position of the tip.

By determining the deflection of the measurement tool that is caused by the tip coming into contact with the machined surface of the workpiece, it is possible to accurately determine the position of the point on the machined surface. This is done by using the determined deflection of the measurement tool to adjust the position monitored by, and obtained from, the control system. Accordingly, the position of the point on the machined surface may be determined by compensating the obtained position as monitored by the control system based on the determined deflection.

With respect to a non-deflected state of the measurement tool, the displacement of a point on the tool body caused by deflection of the measurement tool will obviously depend on the point's position along a longitudinal extension of the measurement tool. However, as used herein, the amount of deflection of the measurement tool should be understood as the displacement of the measurement tool's tip from the position it would have had without deflection of the measurement tool.

Preferably, the parameter is measured continuously or intermittently during measuring the workpiece, and at least until the movement of the measurement tool has stopped, such that the deflection of the measurement tool may be determined based on values of the parameter as measured when the measurement tool is in the stopped position.

According to some embodiments, the point on the machined surface of the workpiece is a point on the inner perimeter of a hole.

As used herein, when referring to a workpiece, a "hole" should be understood as a cavity with circular shape, or substantially circular shape, in any cross-section taken perpendicular to the extension of the hole, but not necessarily with constant diameter. In other words, the hole may be circular cylindrical or, for example, comprise multiple sections of different diameter.

According to some embodiments, the cutting tool comprises a cutting head which includes a cutting edge for machining the workpiece.

The cutting head may be an integral part of the cutting tool, i.e. integrated with, or non-removably mounted to, the end of the tool body. Alternatively, the cutting head is a part that is detachably arranged at the end of the tool body, such that the cutting head can be exchanged and different heads can be selectively used together with the tool body.

The cutting edge may be integral with the cutting head, or it may be a part of an exchangeable cutting insert that is detachably arranged in an insert seat at the cutting head.

According to some embodiments, the measurement tool is the same as the cutting tool and the first tip is located on a cutting edge of the cutting tool. Thus, in such embodiments the tip refers to a point on the cutting edge, namely the point of the cutting edge that first comes into contact with the point on the surface when the measurement tool (which in such embodiments corresponds to the cutting tool) is moved towards the surface for measuring the workpiece.

According to other embodiments, the method further comprises, after having machined the workpiece and before measuring the workpiece, attaching a probing head to the tool body, such that the measurement tool comprises the tool body and the probing head, and wherein the first tip is located on the probing head. Thereby, a tip specifically adapted for probing may be utilized while still employing the same tool body and sensor for the measurement. The method may comprise first removing the cutting head used when machining the workpiece from the tool body, and then attaching the probing head in its place. In other words, the probing head may replace the cutting head. Since only the cutting head is removed and a probing head is attached in its place, the measurement tool, during the step of measuring the workpiece, comprises the same tool body as used for machining.

According to some embodiments, the point on the machined surface of the workpiece is a first point on an inner perimeter of a hole in the workpiece at a first location along the extension of the hole, and wherein the measurement tool further comprises a second tip located at a known distance from the first tip, wherein the first and second tips are arranged to face the first point and a second point on the machined surface, respectively, and wherein the second point is located opposite to the first point on an inner diameter of the hole, and the step of measuring the workpiece further comprises:
- determining, based on a position of the tool body as monitored by the control system and on values of the parameter as measured by the sensor, a second position of the first tip in which the second tip touches the second point; and
- determining the inner diameter of the hole on the basis of the determined first and second positions of the first tip and the known distance between the first and second tip.

The extension of the hole, as referred to herein, should be understood as a longitudinal extension along a hole axis, which, for a workpiece arranged at a lathe or other machine tool suitable for turning, corresponds to the spindle axis, i.e. the rotational axis of the workpiece. Hence, the first and second points on the machined surface are points on the inner perimeter of the hole at a first location along the hole axis.

With reference to a probing head, the first and second tips may be diametrically opposed points on a rim, for example a disc- or ring-shaped rim, extending around the periphery of the probing head. Alternatively, the two tips may be separate, distinct projections located on opposite sides of the periphery of the probing head. Accordingly, a tip, as used herein with respect to a probing head, should be understood as a point of the probing head that first comes into contact with the measured surface when the measurement tool is used for measuring a workpiece.

The inner diameter of the hole may be determined by adding the known distance between the first and second tips to the difference between the first and second positions of the first tip.

Thereby, since it is the difference between two determined positions that is used as basis for determining the inner diameter, the determination is insensitive to any errors in the obtained positions of the first tip based on the position of the tool body as monitored by the control system, and the inner diameter of a machined hole may be determined easily and accurately.

In order to determine the second position of the first tip, a similar method as when determining the first position of the first tip may be used. Accordingly, the step of determining the second position of the first tip may include:
- moving the measurement tool towards the second point;
- detecting, based on the measured values of the parameter, the second tip coming into contact with the second point;
- stopping the movement of the measurement tool;
- obtaining a position of the first tip based on the position of the tool body as monitored by the control system;
- determining, based on the measured values of the parameter, a deflection of the measurement tool; and
- determining the second position of the first tip on the basis of the determined deflection and the obtained position of the first tip.

According to some embodiments, the method further comprises repeating the step of measuring the workpiece and determining a diameter of the hole, but with respect to an inner perimeter of the hole in the workpiece at one or more additional locations, spaced from the first location, along the extension of the hole, and then determining a deviation from a cylindrical shape of the hole based on the determined diameters at the first location and at the one or more additional locations.

When machining a circular cylindrical hole in a workpiece, the resulting hole may sometimes be slightly cone-shaped, for example tapering towards the innermost end of the hole, or the machined hole may deviate from a desired cylindrical shape in other ways. By repeating the measurement of the inner diameter at one or more additional locations along the extension of the hole, a measure of the deviation from a cylindrical shape may be determined. As a simple example, measurements at two different locations may provide a rough estimate of a conicity of the hole, if assuming a linear and uniform diameter variation along the extension of the hole. If a machined hole is expected to have a more complex deviation from the desired cylindrical shape, the measurement should preferably be repeated at further locations along the hole.

Instead of using a probing head with two tips for measuring the diameter of a hole, it is also envisaged that a cutting head having an additional tip, other than the tip on the cutting edge, could be used for determining the diameter in a corresponding way. Hence, if considering the point on the machined surface of the workpiece as a first point on an inner perimeter of a hole in the workpiece at a first location along the extension of the hole, and the tip located on the cutting edge as a first tip, the cutting head may comprise a second tip located at a known distance from the first tip, wherein the first and second tips are arranged to face the first point and a second point on the machined surface, respectively, and wherein the second point is located opposite to the first point on an inner diameter of the hole, and the step of measuring the workpiece further comprises:
- determining, based on a position of the tool body as monitored by the control system and on values of the parameter as measured by the sensor, a second position of the first tip in which the second tip touches the second point; and
- determining the inner diameter of the hole on the basis of the determined first and second positions of the first tip and the known distance between the first and second tip.

If the measurement tool and the tip is not perfectly aligned in a known position in the machine tool coordinate system, i.e. with respect to a zero reference point of the machine tool, an even more accurate determination of the position of the point of the machined surface may be achieved by first calibrating the machining system.

Thus, according to some embodiments, the steps of machining and measuring the workpiece may be preceded by the steps of:
- moving the measurement tool towards a reference point having a known spatial location,
- determining, on the basis of a position of the tool body as monitored by the control system and on values of the parameter as measured by the sensor, a reference position of the first tip in which the first tip touches the reference point,
- determining an offset error based on the known spatial location and the determined reference position of the first tip; and
- calibrating the machining system based on the determined offset error.

Any deviation between the determined reference position of the first tip and the true, known spatial location of the reference point is the result of an offset error in the machining system. Accordingly, if comparing the determined reference position of the first tip with the known spatial location of the reference point, an offset error is readily determined therefrom and is used for calibrating the machining system. Hence, the machining system is calibrated based on the determined offset error such that a position of the tool body and the first tip as subsequently monitored by the control system takes the offset error into account.

As a consequence, a subsequent measurement for determining a position of a point on a machined surface of a workpiece is more accurate since the position of the first tip, obtained on the basis of the position of the tool body as monitored by the control system, takes the offset error into account.

For example, such offset error may be caused by random deviations related to the coupling of the tool body to the machine tool, or the interface between the head and the tool body, or the interface between a cutting head and a cutting insert. An offset error may also arise for example due to temperature variations.

The offset error may be defined as the difference between the determined reference position of the first tip in which the first tip touches the reference point and the known spatial location of the reference point.

If not indicated otherwise, an "offset" or "offset error" as used herein, sometimes also referred to as "radial offset" and "radial offset error", respectively, (to differentiate from other kind of offsets, such as an axial offset), is measured in the direction of movement that the measurement tool undergoes when determining the position of the point on the machined surface, which, for a turning operation, may correspond to a radial direction with respect to the rotational axis of a machined workpiece, more precisely the x-axis according to a conventional lathe coordinate system. The offset may refer to a distance, in said direction, from a machine tool zero reference point to a reference point of an interface at which the tool body is mounted to the machine tool when the first tip is located in a reference position. Accordingly, depending on the machining system used, the offset prior to calibration may be defined by a certain distance, preferably stored in the machining system, that is utilized when controlling and monitoring positions of the tool body (and thus the positions of the cutting tool and the measurement tool) in the x-axis direction. The offset error determined according to the invention may then be added to this previously stored offset, such that an updated, or calibrated, offset is obtained. Accordingly, the calibration may then correspond to storing this updated offset and/or the offset error in the machining system, to be used when subsequently controlling and monitoring the position of the tool body.

The offset and/or the offset error may be stored on a memory or other storage medium that is part of the control system or communicatively coupled thereto, and from which it can be retrieved and employed by the control system in the process of controlling and monitoring the position of the tool body.

One way to determine the reference position of the first tip in which the first tip touches the reference point is to use a similar method as when determining a position of a point on a machined surface of a workpiece, as described previously. Accordingly, the method for determining a reference position of the first tip in which the first tip touches the reference point may comprise the steps of:
- detecting, based on the measured values of the parameter, the first tip coming into contact with the reference point,
- stopping the movement of the measurement tool,
- obtaining a position of the first tip based on the position of the tool body as monitored by the control system,
- determining, based on the measured values of the parameter, a deflection of the measurement tool, and
- determining the reference position of the first tip based on the determined deflection and the obtained position of the first tip.

The method of determining an offset error requires that the true spatial location, in machine tool coordinates, of a reference point is known. The reference point may be located on a surface that is not part of the workpiece, but arranged at a fixed, known position with respect to the machine tool, and located such that the measurement tool can be moved towards such reference point.

According to other embodiments, the reference point is a point on the inner perimeter of a hole in a workpiece to be machined, and wherein the spatial location of the reference point is determined in a probing procedure utilizing a measurement tool comprising a first tip and a second tip with a known distance therebetween, wherein the probing procedure comprises:
- arranging the measurement tool such that the first and second tips are arranged to face the reference point and an auxiliary point, respectively, on the inner perimeter of the hole, wherein the auxiliary point is located opposite to the reference point on an inner diameter of the hole;
- measuring the workpiece by determining a reference position of the first tip in which the first tip touches the reference point, and determining an auxiliary position of the first tip in which the second tip touches the auxiliary point; and
- determining the spatial location of the reference point on the basis of the determined reference position and auxiliary position of the first tip and the known distance between the first and the second tips.

With reference to embodiments utilizing a probing head for such probing procedure, the measurement tool comprises the same tool body as used for machining, but with a probing head, in this case having a first and a second tip, attached at the end thereof instead of a cutting head.

Such probing head used for determining the spatial location of the reference point is preferably the same probing head that may also be used for measuring the workpiece and determining the diameter of the hole after machining.

A diameter of the hole may be determined by adding the known distance between the first and second tips to the difference between the reference position and the auxiliary position. Assuming that the hole is centered with respect to the spindle center axis, and that the position of the spindle center axis in the machine tool coordinate system is well-defined, the radius of the hole, i.e. the determined diameter divided by two, reflects the spatial location of the reference point, in machine tool coordinates, along the direction of movement of the probe when measuring the workpiece.

In order to determine the reference- and auxiliary positions of the first tip, a similar method as when determining a position of a point on a machined surface of a workpiece may be used. Accordingly, the step of determining the reference position may include:
- moving the measurement tool towards the reference point;
- detecting, based on the measured values of the parameter, the first tip coming into contact with the reference point;
- stopping the movement of the measurement tool;
- obtaining a position of the first tip based on the position of the tool body as monitored by the control system;
- determining, based on the measured values of the parameter, a deflection of the measurement tool; and
- determining the reference position on the basis of the determined deflection and the obtained position of the first tip.

In a similar way, the step of determining the auxiliary position may include:
- moving the measurement tool towards the auxiliary point;
- detecting, based on the measured values of the parameter, the second tip coming into contact with the auxiliary point;
- stopping the movement of the measurement tool;
- obtaining a position of the first tip, based on the position of the tool body as monitored by the control system;
- determining, based on the measured values of the parameter, a deflection of the measurement tool; and
- determining the auxiliary position on the basis of the determined deflection and the obtained position of the first tip.

When mounting a new workpiece comprising a pre-formed circular hole to a machine tool spindle, such a hole may not always be perfectly aligned with the spindle center axis and the hole may not always be perfectly circular cylindrical. Therefore, according to some embodiments, the probing procedure may be preceded by a machining step wherein the inner surface of the hole is machined. In this way, the hole that is subsequently subjected to a probing procedure will have a circular cross-section and will be centered with respect to the spindle center axis. Thereby, the radius of the hole as determined using the probing procedure will, with high accuracy, reflect the true spatial location of the reference point, in machine tool coordinates, along the direction of movement of the measurement tool when measuring the workpiece.

Some machine tools may have a dedicated probing surface arranged as an intrinsic part of the machine tool, which probing surface is possible to move into active position to be used as the reference point when calibrating the machining system, as mentioned above. However, it may nevertheless be beneficial to first conduct a probing procedure with respect to a hole in the workpiece, similar to the procedure described above, and use the result of such probing procedure for confirming or updating the true spatial location of the probing surface. Hence, as an example, the difference between the radius of the hole, as determined using a measurement tool comprising a probing head as discussed above, and the determined reference position of the first tip may be considered as a current offset error of the machining system. If thereafter using the measurement tool, still equipped with the probing head, for measuring the position of the reference point on the probing surface, the true spatial location of this reference point may be determined simply by adding the offset error to the determined position of the tip when touching such reference point. Thereafter, in any subsequent calibrations, the probing surface may be used as a reference point, for example in subsequent calibrations made when the measurement tool corresponds to the cutting tool, i.e. wherein the tool body is equipped with a cutting head instead of a probing head and the first tip is located on the cutting edge.

According to some embodiments, the measured parameter is strain, i.e. the sensor arranged at the tool body is a strain sensor.

Strain is easily measured using affordable sensors and can be utilized both for determining deflection of the measurement tool and for determining the tip coming into contact with the workpiece.

According to some embodiments the method further comprises determining, based on the measured parameter, an applied force of the measurement tool when detecting the tip coming into contact with the point on the machined surface of the workpiece. For example, the applied force may be determined based on measured strain at the tool body, requiring also determining a relationship between measured strain and applied force of the measurement tool.

According to some embodiments, the relationship between measured strain and applied force may be determined in advance in a separate procedure, for example a procedure in which the measurement tool is subjected to a known force and the resulting strain is measured and a coefficient characterizing the relation is defined as the measured strain divided by the known force. Such coefficient may be stored on a memory or other storage medium from which it can be retrieved and used for determining applied force when performing the method.

By detecting the applied force, it is possible to detect how firmly the tip is pressed against the workpiece surface. If the applied force is too high, the tip may damage the surface, in particular if the measurement is conducted using a cutting head and not a probing head, i.e. if the tip is located on a cutting edge. On the other hand, if the applied force is too low, it may be difficult to obtain accurate measurements that are not adversely affected by noise and vibrations in the machining system.

Thus, according to some embodiments, the step of detecting the first tip coming into contact with the point on the machined surface of the workpiece and/or the step of stopping the movement of the measurement tool, comprises continuing to move the measurement tool towards the workpiece until a predetermined amount of applied force of the measurement tool is determined, and then stopping the movement. The predetermined amount of applied force may correspond to the threshold at which contact between the first tip and the point on the machined surface is considered to be detected. It is also possible that contact between the first tip and the point on the machined surface is actually detected, or is at least detectable, already at a smaller magnitude of applied force, but that the measurement tool is nevertheless moved further towards the workpiece until the predetermined amount of applied force is determined in order to obtain a stable measurement that is less sensitive to vibrations and other disturbances.

The predefined amount of applied force should be sufficiently large such that the influence of machine tool vibrations and signal noise is eliminated, or at least reduced. This is important in particular when the tool body is long, i.e. when the distance between the tip and the position at which the tool body is mounted to the machine tool is large. Such long tool body would usually be required for example when machining and measuring the internal diameter of a deep hole machined in a workpiece. However, the predefined amount of applied force should not be so large that the surface of the workpiece is damaged when the tip is pressed against it. By selecting a suitable predefined amount of applied force, the position of the first tip obtained from the control system will represent a position at which the tip is firmly pressed against the surface to obtain stable measurements but without damaging the surface. To achieve this, the predetermined amount of applied force may be selected based on the characteristics of the tool body being used. According to some embodiments, the predetermined amount of applied force may be within a range of 5 N - 100 N, such as, for example, within a range of 10 N - 50 N, or within a range of 15 N - 30 N. As an example, the predetermined amount of applied force may be 20 N, or substantially 20 N, which may be suitable for a tool body having a diameter of 60 mm and a length of 720 mm. A predetermined amount of applied force within a range of 5 N - 100 N may be suitable for tool bodies having a diameter of 40 mm - 100 mm and a length of 8 - 16 times the diameter, and may also be useable for other dimensions. For very big (i.e. stiff) tools, it may be beneficial to use a predetermined amount of applied force that is even greater than 100 N.

As discussed, the predefined amount of applied force may represent the threshold at which a stop command is sent to the control system. Depending on the latency in the system, the measurement tool may continue to move a small distance before it is actually stopped, after which the resulting position of the tip is obtained from the control system. Hence, the predefined amount of applied force does not necessarily represent the actual applied force when the measurement tool has stopped. Accordingly, the deflection of the measurement tool does not necessarily correspond to the predefined amount of applied force, but is determined when the measurement tool has actually stopped, such that the true deflection of the measurement tool is used as basis for determining the position of the point on the surface.

According to some embodiments, the deflection of the measurement tool is determined based on measured strain at the measurement tool, requiring also determining a relationship between measured strain and deflection of the measurement tool.

As discussed, the sensor arranged at the tool body may be a strain sensor, and the strain at the measurement tool may be measured thereby. The relationship between measured strain and deflection of the measurement tool may be determined in advance in a separate procedure, for example a procedure in which the measurement tool is deflected a known distance and the resulting strain is measured and a coefficient characterizing the relation is defined as the measured strain divided by the known deflected distance. Such coefficient may be stored on a memory or other storage medium from which it can be retrieved and used for determining deflection of the measurement tool based on measured strain. The relationship between strain and deflection may not only depend on the specific tool body, but also on various other parameters of the machining system. Accordingly, a specific relationship between measured strain and deflection may be determined each time a tool body is mounted in a new machine.

As described above, according to some embodiments, the step of determining a deflection and/or an applied force of the measurement tool may comprise measuring a strain at the measurement tool. It is also envisaged, though, that some parameters used in the method are determined also by other means. For example, deflection of the measurement tool may be measured using an optical sensor.

It may be possible to measure strain, deflection and/or force in various directions with respect to the measurement tool, for example if using a plurality of differently oriented strain sensors arranged at the tool body. However, if not explicitly said otherwise, any references to strain, deflection and/or force as made herein, relates to such parameters in a direction of movement of the measurement tool towards the workpiece when measuring the workpiece. Thus, as an example, when determining the position of a point on the inner perimeter of a hole, the deflection that is determined refers to a deflection in a radial direction with respect to the hole, more precisely a deflection in the radial direction along which the measurement tool moves when measuring the workpiece.

If the cutting edge is part of an exchangeable cutting insert arranged at the cutting head, such cutting insert may be subjected to wear caused by the machining, and may need to be replaced regularly. Therefore, when replacing the cutting insert, the machining system may be re-calibrated simply by determining a new offset based on the assumption that a point on the recently machined and measured surface of the workpiece (using the old cutting insert) represents a reference point having a known spatial location.

Correspondingly, if replacing a machined workpiece with a new workpiece to be machined, but without changing the tool body, cutting head or cutting insert, the previously used offset is still valid, and the cutting tool could be used both to machine and to measure the new workpiece without requiring a new probing procedure.

However, it may nevertheless be beneficial to recalibrate the machining system and/or repeat the probing procedure at regular intervals, to make sure the machining system is well calibrated.

According to a second aspect, the invention relates to a machining system operable for determining a position of a point on a machined surface of a workpiece, the machining system comprising:
- a machine tool;
- a cutting tool comprising a tool body that is arranged at the machine tool and comprises at least one sensor; and
- a control system adapted for controlling and monitoring a position of the tool body;
whereby the machining system is configured to perform a method according to any of the method steps described herein.

The machining system preferably comprises processing circuitry and a storage medium, such as a memory.

The processing circuitry and the storage medium may be integrated parts, or arranged in connection with, the machine tool and the control system. Alternatively, the processing circuitry and/or the storage medium may be located in a computer or server remote from the machine tool and the control system, but communicatively coupled to the control system, for example via a communication interface, such that, for example, control instructions to be executed by the control system, e.g. for stopping the movement of the measurement tool, can be sent to the control system, or coefficients and sensor data required for performing the method can be received and transmitted. Accordingly, the processing circuitry may be configured to execute a computer program stored in the storage medium and triggering at least some of the steps of the method to be performed. The storage medium may also store output from sensors and measurement results and other parameters required for performing the method, as required.

Hence, according to a third aspect, the invention relates to a computer program comprising computer readable instructions to be run in a machining system according to the second aspect of the invention, which computer readable instructions when run in the machining system causes the machining system to perform a method according to any of the method steps described herein.

Thus, the methods described herein may be embodied by a computer program or a plurality of computer programs, which may exist in a variety of forms. For example, they may exist as software programs comprised of program instructions for performing some of the steps of the methods, and may be embodied on a computer readable medium.

According to some embodiments, processing circuitry configured to execute the computer program causing the machining system to perform the method is located in an external computer that is communicatively coupled to the control system, and wherein execution of the computer program may trigger execution of other computer programs stored in the control system, for example programs for controlling the position of the tool body and machining the workpiece, and for retrieving data from the control system, in order to perform the method. Thus, the external computer may be configured to receive signals from the machine tool and/or from the at least one sensor arranged at the tool body, and may be employed for analyzing the signals and detecting the tip coming into contact with the surface, sending instructions to the control system for stopping the measurement tool based on such signals, determining a deflection of the measurement tool, and determining the position of the point of the machined surface.

As already discussed, the sensor arranged at the tool body may be a strain sensor. The strain sensor may be any kind of sensor that is able to detect strain, for example a sensor based on a strain gauge resistor, e.g. a resistive foil strain gauge. Alternatively, the strain sensor may for example be a piezoelectric sensor, a force transducer, an optical strain gauge, or a surface acoustic wave (SAW) strain sensor. The strain sensor may for example be arranged along the tool body, for example in the interior of the tool body (or be integrated in the tool body) so as to be protected from chips of material cut away from a work piece during machining. Alternatively, the strain sensor may be arranged at an exterior surface of the tool body.

Output from the strain sensor may be transmitted, for example wirelessly or via a wire, to processing circuitry at which sensor output is processed and employed for performing the method according to the disclosure.

Hence, the tool body may further comprise a battery, or some other power source, for powering the strain sensor and the means for transmitting sensor output, as well as any other electronic components arranged at the tool body. For example, a memory and/or a processor may be arranged locally at the tool body, e.g. in the form of one or more microcontrollers, at which sensor output may be retrieved and collected before being transmitted wirelessly to an external computer.

According to some embodiments, the tool body further comprises a damper. A measurement tool that includes a damper may be particularly suitable for achieving reliable measurement results when using the method according to the invention. The reason for this is that vibrations in the machining system that are present during measurement, that could disturb the measurement, are reduced.

Further possible features and benefits of this solution will become apparent from the detailed description below.

### Brief description of drawings

The solution will now be described in more detail by means of exemplary embodiments and with reference to the accompanying drawings, in which:
Fig. 1 shows a machining system according to an embodiment.
Fig. 2 shows a flow chart of a method according to an embodiment.
Fig. 3 shows flow charts of further method steps, according to further embodiments.
Fig. 4 shows a cutting tool during measurement on a workpiece according to an embodiment.
Fig. 5 shows a machine tool and a cutting tool according to an embodiment.
Figs. 6a-6c show a measurement tool during a probing procedure according to an embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

Briefly described, the present solution relates to methods and systems for measuring a workpiece, after it has been machined, by using the same sensor-equipped tool body which was used for machining the workpiece. According to the embodiments described hereunder, the measuring of the workpiece comprises moving the measurement tool towards the workpiece, and stopping the movement of the tool when a tip of the measurement tool hits the point on the surface which is being measured. The measuring further comprises determining a deflection of the measurement tool, and then determining the position of the point on the surface based on the determined deflection and the position of the tip as obtained from the control system. In some embodiments, offset values for the machining system may be obtained before machining the workpiece, which makes the method even more efficient and accurate.

One insight relevant for such embodiments is that, since there will be a small delay between when the tip makes contact with the workpiece and when the system detects such contact and stops the measurement tool, the measurement tool will have been deflected to some extent. By measuring this deflection, together with the position of the tip as obtained from the control system, an accurate determination of the spatial location of the point on the surface may be achieved. In some embodiments, a relationship between strain and deflection of the measurement tool may also be used in order to further facilitate the method, by using a strain sensor at the tool body and using the strain as a measure of deflection. A relationship between applied force and strain may also be used, to further facilitate the method, particularly for controlling the amount of force applied in order to accurately detect contact between the tip and the workpiece.

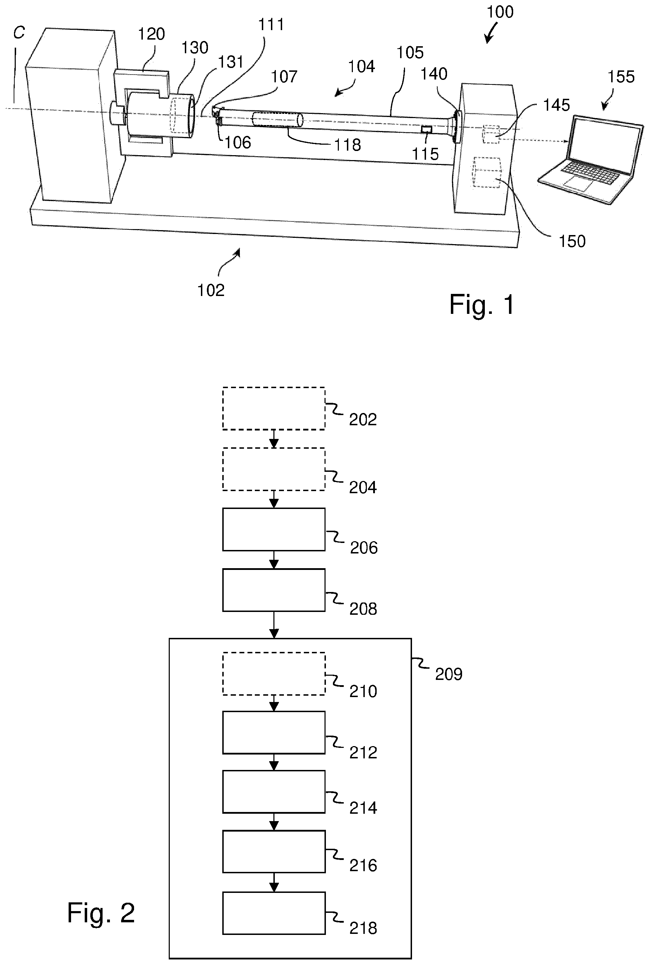

Looking now at Fig. 1, a system according to the present disclosure will be described, in which methods described herein may be performed.

The system 100 comprises a machine tool 102, to which a cutting tool 104, is connected, and a control system 150 adapted for controlling and monitoring the position of the cutting tool.

The cutting tool 104 comprises a tool body 105 and a cutting head 106 arranged at an end of the tool body 105. The cutting head 106 comprises a cutting edge 107, adapted for engagement with a workpiece for cutting away material (for example metal) therefrom. According to this embodiment, the cutting edge 107 is part of an exchangeable cutting insert arranged in an insert seat at the cutting head.

The control system 150, schematically illustrated in Fig. 1, is shown as an integral part of the machine tool 102, and may for example comprise a programmable logic controller (PLC) and a numerical control (NC).

The machining system 100 further comprises processing circuitry and a memory. The processing circuitry and the memory may be intrinsic parts of the control system 150 of the machine tool. In the embodiment shown in Fig. 1, an external computer 155, that is communicatively coupled to the control system 150 via a communication interface 145, comprises the memory and processing circuitry configured to perform the methods as described herein.

The processing circuitry may comprise one or more programmable processors, application-specific integrated circuits, field programmable gate arrays or combinations of these (not shown) adapted to execute instructions. The memory contains instructions executable by said processing circuitry, whereby the machining system 100 is operative for performing the methods as described herein.

The part of the machining system 100 which executes the method, such as the control system 150 and/or the external computer 155, may be a group of devices, wherein functionality for performing the method are spread out over different physical, or virtual, devices of the system. In other words, the part of the machining system 100 which executes the method may be a cloud-solution, i.e. may be deployed as cloud computing resources that may be distributed in the machining system 100.

The instructions executable by said processing circuitry may be arranged as a computer program stored e.g. in the memory. The processing circuitry and the memory may be arranged in a sub-arrangement. The sub-arrangement may be a micro-processor and adequate software and storage therefore, a Programmable Logic Device, PLD, or other electronic component(s)/processing circuit(s) configured to perform the methods mentioned described herein.

The computer program may comprise computer readable code means, which when run in a machining system 100 causes the machining system 100 to perform the methods steps described in any of the embodiments described herein. The computer program may be carried by a computer program product connectable to the processing circuitry. The computer program product may be the memory. The memory may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory. Alternatively, the computer program may be stored on a server or any other entity connected to which the machining system 100 has access, for example via the communication interface 145. The computer program may then be downloaded from the server into the memory.

The tool body 105 is an elongate element or elongate member. In the present embodiment, the tool body 105 is a cylindrical element extending along an axis 111.

A machine interface 140 is arranged at an end of the tool body 105 for mounting the tool body, and thus the cutting tool 104, in the machine tool 102. In the embodiment illustrated in Fig. 1, the cutting tool 104 is employed for internal turning wherein material from an internal surface of a work piece 130, e.g. within a hole 131 of the work piece, is removed. Internal turning is sometimes also referred to as boring.

The tool body 105 further comprises a sensor 115. In this embodiment, the sensor is a strain sensor arranged at the exterior of the tool body 105, and the cutting tool 104 further comprises a damper 118 arranged inside the tool body 105. A damper is sometimes used when machining deep inside holes to reduce vibrations and thereby provide improved machining results. Such damper may also contribute to provide accurate measurements according to the present invention since vibrations of the tool body are reduced that might otherwise disturb the measurements.

The machine tool 102 further comprises a spindle 120 for rotating the work piece 130 around a spindle center axis C. The cutting tool 104 is mounted via the machine interface 140 such that it may be moved towards the work piece 130 for cutting away material from the work piece 130 as the work piece 130 rotates. In the present embodiment, the work piece 130 has a hole 131 in which the cutting tool 104 may cut away material for expanding the hole 131.

As already mentioned, the machine tool may comprise a communication interface 145 for communicating with the external computer 155, e.g. for transmitting data from the control system 150 to the external computer 155 and/or for receiving control instructions at the control system from the external computer 155. The communication interface 145 may also be employed to transmit sensor output, for example from the sensor 115, to the external computer 155. However, in other embodiments, such sensor output is transmitted to the external computer 155 directly from a separate communication interface arranged at the cutting tool.

The signaling provided by the communication interface 145 in the machine tool, and/or the communication interface arranged at the cutting tool, may be provided via wired or wireless signals, for example via Bluetooth. The external computer 155 may have a user interface, e.g. for indicating results of measurements to a human operator using the machine tool 102. The computer 155 may for example be a personal computer or a hand held device such as a mobile phone or a tablet computer.

Looking now at Fig. 2, the steps of a method for determining the position of a point on a surface of a workpiece in a machining system according to an embodiment will now be described. The surface of the workpiece is typically a machined surface which requires measuring in order to determine if the workpiece, or a part of the workpiece, is within required tolerances.

Optionally, the method comprises obtaining 202 a spatial location of a reference point and/or obtaining an offset error on the basis of such reference point, or on the basis of some other reference point with a known spatial location, and calibrate 204 the machining system based on such offset error.

The method comprises machining 206 the workpiece using the cutting edge of the cutting tool. The machining may be any type of machining using a cutting tool, such as turning or boring. According to some embodiments, the machining 206 comprises enlarging a hole in the workpiece. The machining may comprise machining an entire workpiece until it is finished, or it may comprise finishing one or a plurality of features of the workpiece.

The method further comprises, after machining of the workpiece, measuring the workpiece using a measurement tool comprising the tool body and a first tip. The measuring may be performed using the same cutting edge used to machine the workpiece, i.e. wherein the tip employed for the measurement is located on the cutting edge. In other words, the cutting tool used for machining the workpiece may also be utilized as measurement tool for measuring the workpiece.

The measuring first comprises moving 208 the measurement tool towards the workpiece, while measuring a parameter using the sensor located at the tool body. The movement of the measurement tool is done in a controlled manner, via the control system, and is generally performed relatively slowly, in order not to hit the workpiece too hard.

Secondly, the measuring comprises determining 209 a first position of the first tip of the measurement tool in which the first tip touches the point on the machined surface, thereby indicating the position of the point on the machined surface. According to the embodiment illustrated in Fig. 2, the determining 209 of the position of the point on the surface may include several steps 210-218, described below.

Optionally, the method comprises measuring 210 an applied force of the measurement tool. Such measurement may be based on strain at the measurement tool, measured using a strain sensor arranged at the tool body.

According to the illustrated embodiment, the measuring comprises detecting 212 that the first tip of the measurement tool comes into contact with the point on the surface of the workpiece. The detecting 212 may be performed with any type of sensor for detecting an interaction. In this embodiment, the detecting 212 is performed by a strain sensor, measuring strain at the measurement tool. The measured strain may be translated to an applied force, using a previously determined relationship between strain and force. Accordingly, the step of detecting 212 that the tip comes into contact with the point on the surface of the workpiece may correspond to measuring 210 a force that reaches, or exceeds, a predefined force threshold.

According to the illustrated embodiment, the measuring further comprises stopping 214 the movement of the measurement tool, after it has been detected that the tip is in contact with the workpiece. Depending on the system and implementation, there may be a slight delay between detecting the contact between the tip and the workpiece, and the measurement tool actually stopping the movement.

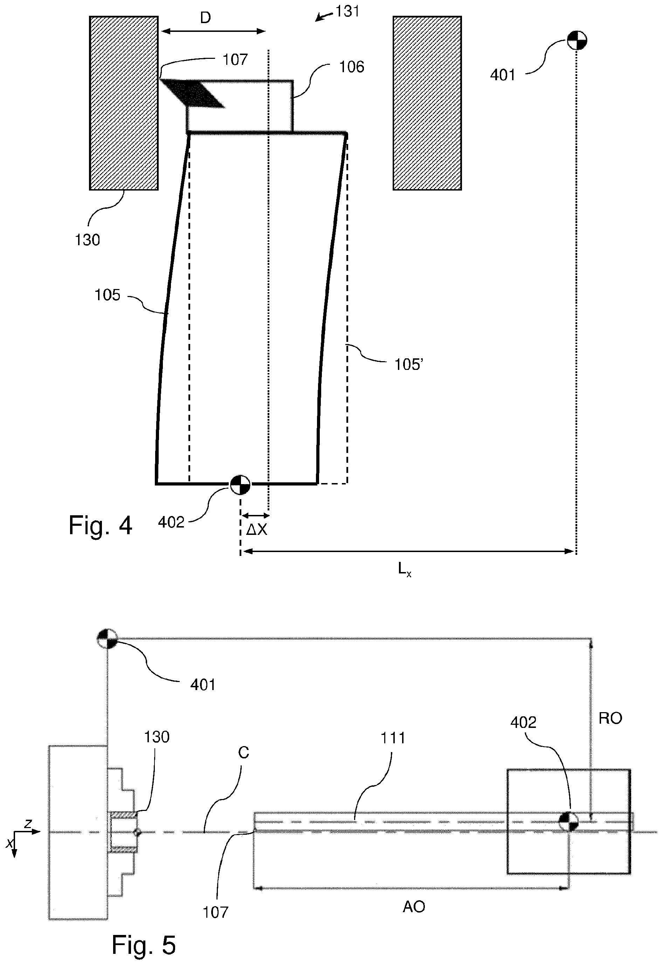

According to the illustrated embodiment, the measuring further comprises obtaining 216 the position of the tip based on the position of the tool body as monitored by the control system, after the measurement tool has stopped. Since the control system does not take tool deflection into account, the obtained position of the tip may not be correct. This is schematically illustrated in Fig. 4, wherein the measurement tool is illustrated as a cutting tool, i.e. wherein the tip is located on the cutting edge 107 of the cutting tool. The cutting tool is illustrated in a state during measurement just after the tool has been stopped and is thus maximally deflected. For illustrative purposes, the deflection of the cutting tool due to the cutting edge being pressed against the surface of the workpiece 130 is greatly exaggerated in Fig. 4. The tool body 105' in a non-deflected state, at the time the tip on the cutting edge 107 first touches the workpiece, is illustrated by dashed lines. According to this embodiment, the position of the tip on the cutting edge 107, in a direction of movement of the cutting tool when measuring the workpiece, i.e. in this embodiment in a direction along the x-axis according to a conventional coordinate system of a lathe (see Fig. 5), as controlled and monitored by the control system 150, depends on the position of the tool body in such direction, more precisely a radial distance Lₓ between a machine tool zero reference point 401 and a machine interface reference point 402 corresponding to a point of the tool body or of a tool holder at which the tool body is mounted to the machine tool. As monitored by the control system, the position of the tip on the cutting edge along the x-axis would then correspond to the sum of the distance Lₓ and a known distance D along the x-axis between the machine interface reference point 402 and the tip on the cutting edge 107 in a non-deflected state of the cutting tool.

Once again referring to Fig. 2, according to the illustrated embodiment, the measuring further comprises determining 218 a deflection of the measurement tool. By determining how the position of the tip is affected by tool deflection, it is possible to determine the position of the point of the workpiece more accurately. In some embodiments, the determining 218 of deflection is performed by the processing circuitry, for example the processor of external computer 155, based on measurement signals received thereby.

Then, the position of the point on the surface, i.e. the position of the tip in which the tip touches the point on the surface, is determined based on the determined deflection and the position of the tip obtained from the control system.

In this embodiment, determining the deflection comprises measuring a strain at the measurement tool, and translating the measured strain to a deflection of the measurement tool. With reference to Fig. 1, strain may be measured by the sensor 115, and sensor output may be received at the external computer 155. Furthermore, by using a previously determined relationship between measured strain and applied force, the force may be continuously monitored based on the strain sensor signals. As soon as the force reaches a predetermined threshold value, i.e. a predetermined amount of applied force, a stop instruction is triggered and sent from the external computer 155 to the control system 150 via the communication interface 145. When the instruction is received, the control system stops the movement of the measurement tool. The strain at the measurement tool in the stopped position, as measured by the strain sensor 115 and received at the external computer 155, is then used for determining the deflection of the measurement tool by employing a previously determined relationship between measured strain and deflection of the measurement tool. Then, the external computer 155 determines the position of the point on the machined surface based on the determined deflection and on a position of the tip as obtained from the control system via the communication interface 145. As discussed, the position obtained from the control system is based on the position of the tool body as monitored by the control system and the known location of the tip with respect to the tool body, but it does not take deflection of the measurement tool into account.

According to some embodiments, the step of determining the position of the point on the surface comprises deducting the deflection of the measurement tool from the obtained position of the tip. Accordingly, with reference to the example illustrated in Fig.4, in which the deflection of the cutting tool is ΔX, the position of the tip on the cutting edge 107 according to the control system is Lₓ + D, but the true position of the tip, and thus also the position of the point on the surface of the workpiece, is Lₓ + D - ΔX.

If the exact position of the tip of the measurement tool in the machine tool coordinate system (e.g. with respect to the spindle center axis of the machine tool), for a non-deflected measurement tool, is unknown or uncertain, it may be preferred to calibrate the machining system by determining an offset error before using a method as described above for determining the position of a point at a machined surface of the workpiece.

Fig. 5 schematically illustrates the machining system 100 comprising a machine tool 102, seen from above, according to an embodiment of the invention, wherein a cutting tool is shown in a reference position in which the tip on the cutting edge 107 is located at the spindle center axis C. In this reference position, the distance, in the x-direction, between the machine tool zero reference point 401 and the machine interface reference point 402 corresponds to a radial offset RO. A position of the tip on the cutting edge 107, in machine tool coordinates, along a corresponding direction (i.e. along the x-axis), will thus be defined as the sum of the radial offset RO and a distance, in a corresponding direction, between the tip on the cutting edge 107 and the spindle center axis C. The radial offset RO may be stored on the memory and employed by the control system when controlling and monitoring the position of the cutting tool. However, as already mentioned, due to inaccuracies for example caused by random deviations related to the coupling of the cutting tool to the machine tool, or the interface between the cutting head and the tool body, or the interface between the cutting head and a cutting insert, the stored radial offset may not be correct, i.e. it may not represent the actual distance in the x-axis direction between the machine tool zero reference 401 and the machine interface reference point 402 when the tip on the cutting edge 107 is located on the spindle center axis C, rendering the position of the cutting edge 107 as monitored by the control system to be incorrect.

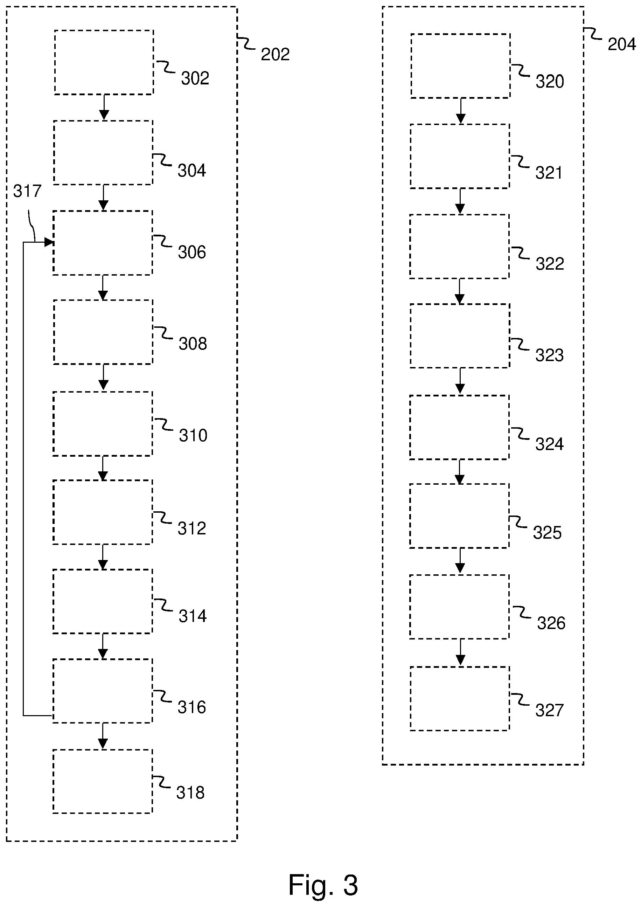

Accordingly, with reference to Fig. 3, the optional steps of obtaining 202 a spatial location of a reference point and obtaining an offset error, or an updated offset, for a measurement tool on the basis of such reference point, and calibrating 204 the machining system based on such offset error or updated offset, are further described below.

According to some embodiments, the reference point is a point on the inner perimeter of a hole in the workpiece to be machined. The method for obtaining 202 a spatial location of such reference point may then comprise an initial step of machining 302 the workpiece 130, or a part of the workpiece, in order to ensure that the hole 131 containing the reference point is perfectly circular and centered at the spindle center axis C.

If there is an offset error not only in a radial direction but also in an axial direction of the cutting tool, i.e. in a direction along the longitudinal axis 111 of the tool body, such axial offset error may also be determined during this initial machining step. For example, according to some embodiments wherein a strain sensor is used to detect cutting tool deflection, an axial offset error may be identified by detecting a change of the measured strain caused by engaging the workpiece when moving the cutting tool in the axial direction for machining the inner surface of the hole in the workpiece. Accordingly, the axial position of the tip on the cutting edge at which an increased strain is detected may indicate a true axial offset AO (illustrated in Fig. 5) with respect to the machine interface reference point 402.

After the initial machining step 302, a probing procedure may be performed to determine the true spatial location of a reference point.

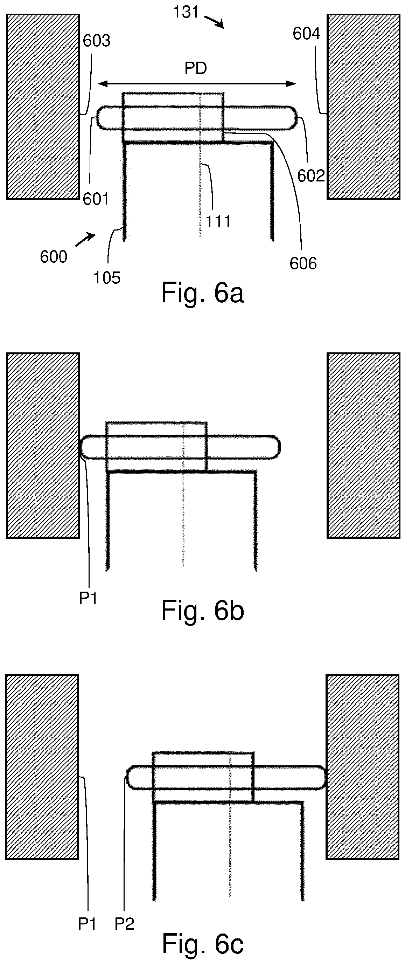

The probing procedure may comprise replacing 304 the cutting head with a probing head 606, illustrated in Figs. 6a-6c, comprising a first tip 601 and a second tip 602 arranged to face a reference point 603 and an auxiliary point 604, respectively, arranged on opposite sides of an inner diameter of the hole 131, with a known distance PD between the first and second tips. Hence, the same tool body 105 is used, to which a probing head 606 is attached instead of the cutting head 106. Thereby, in this state the measurement tool corresponds to a probe 600 comprising the tool body 105 and the probing head 606.

The probing procedure may further comprise measuring the workpiece by determining a reference position P1 of the first tip 601 in which the first tip 601 touches the reference point 603, as illustrated in Fig. 6b, and determining an auxiliary position P2 of the first tip 601 in which the second tip 602 touches the auxiliary point 604, as illustrated in Fig. 6c. According to some embodiments, each of these measurements may be performed in a similar manner as when using the tip to determine the position of a point of a machined surface of the workpiece, as described previously.

Accordingly, the probing procedure may comprise moving 306 the probe 600 towards the workpiece such that the first tip 601 approaches the reference point 603 or such that the second tip 602 approaches the auxiliary point 604.

Then, the probing procedure may comprise detecting 308 contact between the first or second tip and the reference or auxiliary point, respectively.

Then, the probing procedure may comprise stopping 310 the movement of the probe 600.

Then, the probing procedure may comprise obtaining 312 the position of the first tip 601, as monitored by the control system, after the probe 600 has stopped.

Then, the probing procedure may comprise determining 314 the deflection of the probe 600.

Then, the probing procedure may comprise determining 316 the position of the first tip 601, based on the determined deflection and the obtained position of the first tip 601 as monitored by the control system.

As already mentioned, if using a strain sensor arranged at the tool body 105 to detect the deflection of the measurement tool, a relationship between strain and deflection for a certain tool setup needs to be established. Such relationship may be determined in a separate procedure, but could also be determined as an optional step during the probing procedure. Thus, the control system may be instructed to move the probe 600 further towards the workpiece a pre-determined distance from the reference position at which the probe was stopped, to a secondary position. In this regard, it should be noticed that the further movement towards the workpiece does not result in an actual movement of the tip (since it is already in contact with the workpiece surface), but merely causes the probe 600 to be further deflected a corresponding distance. Therefore, the ratio between the difference between the respective strain measurements obtained at the reference position and the secondary position and the distance the probe was instructed to move, provides a relationship between strain and deflection.

Thereafter, as indicated in Fig. 3, the steps 306-316 may be repeated 317 for the point not yet measured, such that a reference position P1 and an auxiliary position P2 of the first tip 601 is determined at a location when the first tip 601 touches the reference point 603 and at a location when the second tip 602 touches the auxiliary point 604, respectively.

The method further comprises determining 318 the spatial location of the reference point based on the determined reference position P1 and auxiliary position P2 of the first tip 601 and the known distance PD between the first and second tips.

According to the illustrated embodiment, the spatial location of the reference point, along the x-axis direction, corresponds to the radius of the hole. Thus, since the sum of the known distance PD and the distance between the reference position P1 and the auxiliary position P2 corresponds to the diameter of the hole, the spatial location of the reference point may be determined as (P1-P2 + PD)/2.

As further illustrated in Fig. 3, when the spatial location of a reference point is known, it is possible to determine an offset error and calibrate 204 the machining system on the basis thereof, as described in the following.

First, if the calibration is to be made with respect to a cutting tool used in subsequent machining, the probing head currently attached to the tool body is removed and a cutting head 106, comprising a cutting edge 107, is attached to the tool body 105, such that the measurement tool corresponds to a cutting tool 104, wherein the first tip arranged to make contact with the workpiece for measuring the workpiece is located on the cutting edge 107.

Then, according to some embodiments, the offset error may be determined using a measurement performed in a similar manner as when determining the position of a point of a machined surface of the workpiece, as described previously.

Accordingly, the method for determining the offset error may comprise moving 320 the measurement tool towards the reference point.

Then, on the basis of a position of the tool body as monitored by the control system, a position of the first tip in which the tip touches the reference point is determined. This may for example include the steps of:
- detecting 321 the first tip coming into contact with the reference point,
- stopping 322 the movement of the measurement tool,
- obtaining 323 a position of the tip based on the position of the tool body as monitored by the control system,
- determining 324 a deflection of the measurement tool, and
- determining 325 the position of the tip based on the determined deflection and the obtained position of the tip.

Then, the method may comprise determining 326 an offset error of the measurement tool on the basis of the known spatial location of the reference point and the determined position of the tip. According to some embodiments, the offset error is simply the difference between the determined position of the tip and the known location of the reference point.

Then, the machining system may be calibrated 327 based on the determined offset error. For example, an updated offset corresponding to the previously stored offset adjusted by the offset error, may be stored. Such updated, or calibrated, offset is subsequently used instead of the previously stored offset when controlling and monitoring the position of the tip of the measurement tool.

After machining a hole in a workpiece, the diameter of the finished hole may be determined using a similar method (and preferably using the same or a similar probing head) as described above with reference to figs. 6a-6c, i.e. wherein the first and second tips of the probing head is arranged to touch a first and a second point, respectively, on the inner perimeter of the machined hole on opposite sides of an inner diameter thereof. This provides a very accurate measure of the diameter of the machined hole.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method for determining a position of a point on a machined surface of a workpiece (130) in a machining system (100), the machining system (100) comprising:
- a machine tool (102);
- a cutting tool (104) comprising a tool body (105) that is arranged at the machine tool (102) and comprises at least one sensor (115); and
- a control system (150) adapted for controlling and monitoring a position of the tool body (105);
wherein the method comprises the steps of:
- machining (206) the workpiece with the cutting tool (104); and then
- measuring the workpiece (130) using a measurement tool (104, 600) comprising the tool body (105) and a first tip, wherein measuring the workpiece (130) comprises:
- moving (208) the measurement tool towards the workpiece (130) while measuring a parameter using the sensor (115), and
- determining (209), based on a position of the tool body (105) as monitored by the control system (150) and on values of the parameter as measured by the sensor (115), a first position of the first tip in which the first tip touches the point on the machined surface, thereby indicating the position of the point on the machined surface.

2. A method according to claim 1, wherein determining the first position of the first tip of the measurement tool comprises:
- detecting (212), based on the measured values of the parameter, the first tip coming into contact with the point on the machined surface of the workpiece;
- stopping (214) the movement of the measurement tool;
- obtaining (216) a position of the first tip based on the position of the tool body as monitored by the control system;
- determining (218), based on the measured values of the parameter, a deflection of the measurement tool; and
- determining the first position of the first tip based on the determined deflection and the obtained position of the first tip.

3. A method according to any of the previous claims, wherein the point on the machined surface of the workpiece is a point on an inner perimeter of a hole (131) in the workpiece.

4. A method according to any of the previous claims, wherein the measurement tool is the same as the cutting tool and the first tip is located on a cutting edge (107) of the cutting tool.

5. A method according to any of the claims 1-3, wherein the method further comprises, after having machined the workpiece and before measuring the workpiece, attaching a probing head (606) to the tool body (105), such that the measurement tool (600) comprises the tool body (105) and the probing head (606), and wherein the first tip is located on the probing head (606).

6. A method according to any of the previous claims, wherein the point on the machined surface of the workpiece is a first point on an inner perimeter of a hole in the workpiece at a first location along the extension of the hole, and wherein the measurement tool further comprises a second tip located at a known distance from the first tip, and wherein the first and second tips are arranged to face the first point and a second point, respectively, on the machined surface, wherein the second point is located opposite to the first point on an inner diameter of the hole, and wherein the step of measuring the workpiece further comprises:
- determining, based on a position of the tool body as monitored by the control system and on values of the parameter as measured by the sensor, a second position of the first tip in which the second tip touches the second point; and
- determining the inner diameter of the hole at the first location on the basis of the determined first and second positions of the first tip and the known distance between the first and second tip.

7. A method according to claim 6, wherein the method further comprises
- repeating the step of measuring the workpiece and determining an inner diameter of the hole, but with respect to an inner perimeter of the hole in the workpiece at one or more additional locations, spaced from the first location, along the extension of the hole,
- determining a deviation from a cylindrical shape of the hole based on the determined diameters at the first location and at the one or more additional locations.

8. A method according to any of the previous claims, wherein the steps of machining and measuring the workpiece is preceded by the steps of:
- moving (320) the measurement tool towards a reference point having a known spatial location;
- determining (321-325), based on a position of the tool body as monitored by the control system and on values of the parameter as measured by the sensor, a reference position of the first tip in which the first tip touches the reference point;
- determining (326) an offset error on the basis of the known spatial location and the determined reference position of the first tip; and
- calibrating (327) the machining system based on the determined offset error.

9. A method according to claim 8, wherein the reference point having a known spatial location is a point on the inner perimeter of a hole in the workpiece, and wherein the known spatial location is determined in a probing procedure that precedes the steps of claim 8, and in which the measurement tool comprises a second tip (602) located at a known distance (PD) from the first tip (601), wherein the probing procedure comprises:
- arranging the measurement tool such that the first and second tips (601, 602) are arranged to face the reference point (603) and an auxiliary point (604), respectively, on the inner perimeter of the hole, wherein the auxiliary point (604) is located opposite to the reference point (603) on an inner diameter of the hole;
- measuring (306-316) the workpiece by determining a reference position (P1) of the first tip (601) in which the first tip (601) touches the reference point (603), and determining an auxiliary position (P2) of the first tip (601) in which the second tip (602) touches the auxiliary point (604); and
- determining (318) the spatial location of the reference point on the basis of the determined reference position (P1) and auxiliary position (P2) of the first tip (601) and the known distance (PD) between the first and the second tips (601, 602).

10. A method according to claim 9, wherein the probing procedure is preceded by a machining step (302) wherein the inner surface of the hole is machined.

11. A method according to any of the previous claims, wherein the measured parameter is strain.

12. A method according to claim 2, further comprising determining, based on the measured parameter, an applied force of the measurement tool when detecting the tip coming into contact with the point on the machined surface of the workpiece.

13. A method according to the claims 11 and 12, wherein the applied force of the measurement tool is determined based on a predetermined relationship between strain and applied force of the measurement tool.

14. The method according to any of the claims 12 or 13, wherein detecting the tip coming into contact with the point on the machined surface of the workpiece and stopping the movement of the measurement tool comprises continuing to move the measurement tool towards the workpiece until a predetermined amount of applied force of the measurement tool is determined, and then stopping the movement.

15. The method according to claim 14, wherein the predetermined amount of applied force is within a range of 5 N - 100 N.

16. The method according to the claims 2 and 11, wherein the deflection of the measurement tool is determined based on a predetermined relationship between strain and deflection of the measurement tool.

17. A machining system (100) operable for determining a position of a point on a machined surface of a workpiece (130), the machining system (100) comprising:
- a machine tool (102);
- a cutting tool (104) comprising a tool body (105) that is arranged at the machine tool (102) and comprises at least one sensor (115);
- a control system (150) adapted for controlling and monitoring a position of the tool body (105);
- processing circuitry; and
- a memory;
whereby the machining system (100) is configured to perform the method according to any of the claims 1-16.

18. A machining system according to claim 17, wherein the sensor (115) is a strain sensor.

19. A machining system according to any of the claims 17-18, wherein the tool body further comprises a damper (118).

20. A computer program comprising computer readable instructions to be run in a machining system according to any of the claims 17-19, which computer readable instructions when run in the machining system causes the machining system to perform a method according to any of the claims 1-16.
